# EUROPEAN PATENT APPLICATION

(11) **EP 3 435 598 A1**
(43) Date of publication of application: **30.01.2019**
(21) Application number: 18156748.8
(22) Date of filing: 14.02.2018
(51) Int. Cl.: H04L 12/40

(54) **SLAVE DEVICE, INDUSTRIAL NETWORK SYSTEM, AND METHOD OF CONTROLLING SLAVE DEVICE**

(30) Priority: 27.07.2017 JP 2017145545
(71) Applicant: OMRON CORPORATION, Kyoto-shi, Kyoto 600-8530 (JP)
(72) Inventor: XU, Ziqiang, KYOTO, 600-8530 (JP); MIZUMOTO, Hirohito, KYOTO, 600-8530 (JP); YONEDA, Mitsuhiro, KYOTO, 600-8530 (JP)
(74) Representative: Ter Meer Steinmeister & Partner

(57) **Abstract**

An object is to increase types of executable work. In a slave device (200), "normal connection" support and "Fast Connect" support can be preset by user.

## Description

### BACKGROUND

### Technical Field

The present disclosure relates to a slave device, an industrial network system, and a method of controlling the slave device.

### Description of Related Art

In the field of factory automation (FA), various types of devices share and control work processes. To execute operations of various kinds of controllers, remote I/O, and manufacturing devices used for work in cooperation in certain regions such as factory facilities, industrial network systems also known as field networks connecting such devices are constructed.

In many industrial network systems, production processes are controlled by connecting master devices and various types of slave devices operated under the control of the master devices and executing communication.

An end effector is connected to each slave device. The end effector can be mounted on and detached from a corresponding slave device. In each slave device, an end effector connected to the slave device can be exchanged according to a work purpose (see Patent Document 1).

### Patent Documents

[Patent Document 1] Japanese Laid-open No. 9-174474 (disclosed on 8 July, 1997)

### SUMMARY

Incidentally, a technology called "Fast Connect" is known in Ether CAT (registered trademark) which is a representative of industrial network systems.

"Fast Connect" is a technology for shortening a time necessary for slave devices and an end effector connected to the slave devices to construct appropriate communication. For example, when "Fast Connect" is not applied, the time is in a range of tens of seconds to 1 minute or more. On the other hand, when "Fast Connect" is applied, the time is about several seconds.

To apply "Fast Connect," it is necessary both for a slave device to support "Fast Connect" and for an end effector to support "Fast Connect." Conversely, when the end effector does not support "Fast Connect," because "Fast Connect" may not be applied, it is also necessary for the slave device not to support "Fast Connect."

In the related art, whether a slave device support "Fast Connect" or does not support "Fast Connect" has been determined when the slave device is manufactured. Therefore, in the slave device, types of end effectors capable of constructing communication appropriate for the slave device may be limited when work is executed. As a result, in the slave device, the problem that types of executable work are few occurs.

An object of the present disclosure is to realize a slave device, an industrial network system, and a method of controlling the slave device capable of increasing types of executable work.

To resolve the foregoing problem, according to an aspect of the present disclosure, a slave device is provided. A user is able to preset a first mode corresponding to a first connection scheme in which the slave device and a first end effector connected to the slave device construct appropriate communication, and a second mode corresponding to a second connection scheme in which the slave device and a second end effector connected to the slave device construct appropriate communication, wherein a time necessary to construct the appropriate communication is shorter in the second connection scheme than in the first connection scheme.

To resolve the foregoing problem, according to another aspect of the present disclosure, there is a method of controlling a slave device. A user is able to preset a first mode corresponding to a first connection scheme in which the slave device and a first end effector connected to the slave device construct appropriate communication, and a second mode corresponding to a second connection scheme in which the slave device and a second end effector connected to the slave device construct appropriate communication, wherein a time necessary to construct the appropriate communication is shorter in the second connection scheme than in the first connection scheme.

In this configuration, the slave device set to one of the first and second connection schemes in a manufacturing stage can be caused to also support the other of the first and second connection schemes according to a manufacturing line or a manufacturing process. In general, the end effector supports only one of the first and second connection schemes. However, in the foregoing configuration, the slave device can construct appropriate communication with both the first end effector supporting only the first connection scheme and the second end effector supporting only the second connection scheme.

Accordingly, in the foregoing configuration, since the types of end effectors capable of constructing appropriate communication with the slave device can be increased, the types of work executable in the slave device can be increased.

In the slave device according to the aspect of the present disclosure, the user is preferably able to preset a third mode in which the slave device automatically determines whether the first end effector is connected to the slave device or the second end effector is connected to the slave device.

In the foregoing configuration, whether the end effector connected to the slave device is the first end effector supporting only the first connection scheme or the second end effector supporting only the second connection scheme, the slave device and the end effector can construct the appropriate communication.

The slave device according to the aspect of the present disclosure preferably further includes an integrated circuit (IC) chip that forms a physical layer. The setting of the slave device is preferably switched by rewriting information stored in the IC chip.

In the foregoing configuration, since a communication form of the slave device and the end effector connected to the slave device can be controlled, it is possible to easily realize the setting of the slave device.

In the slave device according to the aspect of the present disclosure, one of the first and second modes is preferably set during a time determined in advance.

In the slave device according to the aspect of the present disclosure, before a working process determined in advance, at least one of the first and second modes is preferably set.

In both of the foregoing configurations, the first mode and/or the second mode can be set at a desired timing.

According to still another aspect of the present disclosure, there is provided an industrial network system including the slave device according to the aspect of the present disclosure.

In the foregoing configuration, it is possible to realize the industrial network system in which the slave device can execute diverse work.

According to an aspect of the present disclosure, it is possible to increase kinds of work executable in a slave device.

### BRIEF DESCRIPTION OF THE DRAWINGS

FIG. 1 is a block diagram illustrating an overall configuration of an industrial network system according to an embodiment of the present disclosure.
FIG. 2 is a block diagram illustrating an example of a configuration of a control part illustrated in FIG. 1.
FIG. 3 is a table illustrating patterns indicating whether a slave device and an end effector connected to the slave device can construct appropriate communication.
FIG. 4 is a flowchart illustrating a flow of an operation of a slave control device according to an embodiment of the present disclosure when "Fast Connect" is applied.
FIG. 5 is a flowchart illustrating a flow of an operation of the slave control device according to the embodiment of the present disclosure "Fast Connect" is not applied.
FIG. 6 is a flowchart illustrating a flow of an operation of the slave control device according to the embodiment of the present disclosure when "Fast Connect" is automatically determined.
FIG. 7 is a flowchart illustrating a flow of an operation of the slave control device according to the embodiment of the present disclosure when "Fast Connect" support of the slave device and "Fast Connect" non-support of the slave device are switched during a time determined in advance.
FIG. 8 is a block diagram illustrating an application example according to the embodiment of the present disclosure.

### DESCRIPTION OF THE EMBODIMENTS

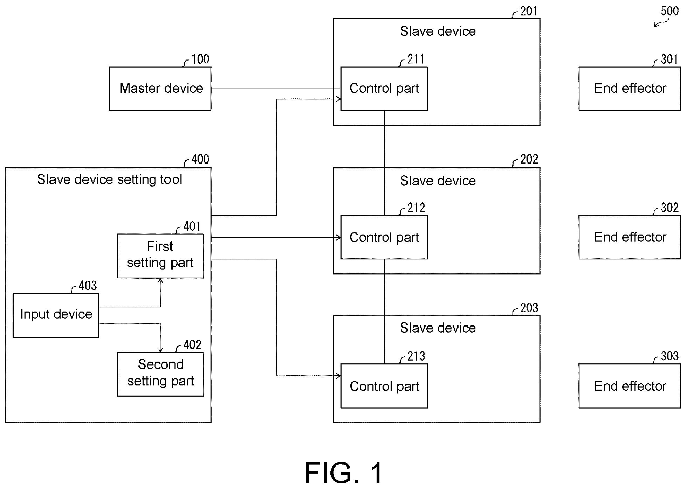

FIG. 1 is a block diagram illustrating an overall configuration of an industrial network system 500 according to an embodiment of the present disclosure. The industrial network system 500 is a network that conforms to a standard of Ether CAT and is built in, for example, a factory and used as an FA system. The industrial network system 500 includes a master device 100, three (a plurality of) slave devices 201 to 203, three (a plurality of) end effectors 301 to 303, and a slave device setting tool (slave control device) 400. The slave devices 201 to 203 are each, for example, a robot arm or a machine tool. The master device 100 is a control device that controls operations of the slave devices 201 to 203 and the end effectors 301 to 303. The slave device setting tool 400 is an information processing device, for example, a personal computer, that sets the slave devices 201 to 203 and sets the end effectors 301 to 303.

The master device 100 transmits an information signal including control data via a network according to a program and/or an operation. The slave devices 201 to 203 each receive the information signal and operate according to the control data. Production in a factory including the industrial network system 500 is achieved by the master device 100 controlling content and a timing of an operation and the slave devices 201 to 203 cooperating to share work.

The end effectors 301 to 303 are respectively connected to the slave devices 201 to 203. When the slave device 201 is connected to the end effector 301, the slave device 201 can operate the end effector 301. When the slave device 202 is connected to the end effector 302, the slave device 202 can operate the end effector 302. When the slave device 203 is connected to the end effector 303, the slave device 203 can operate the end effector 303. The end effectors 301 to 303 have a function of directly working on a target (not illustrated) when operated by the slave devices 201 to 203, respectively. The end effectors 301 to 303 communicate with the slave devices 201 to 203 connected to the end effectors 301 to 303, respectively. The end effectors 301 to 303 communicate with the master device 100 via the slave devices 201 to 203 connected to the end effectors 301 to 303, respectively. The end effectors 301 to 303 receive the information signal from the master device 100 and the slave devices 201 to 203 and operate according to the control data included in the information signal.

Hereinafter, description will focus on any one of the slave devices 201 to 203. The slave device focused on among the slave devices 201 to 203 is referred to as the slave device 200. An end effector connected to the slave device 200 among the end effectors 301 to 303 is referred to as an end effector 300.

The slave device setting tool 400 includes a first setting part 401, a second setting part 402, and an input device 403. The first setting part 401 switches the setting of the slave device 200 to a first mode corresponding to "normal connection" so that the slave device 200 and the end effector 300 connected to the slave device 200 support a technology (hereinafter referred to as "normal connection": a first connection scheme) for constructing appropriate communication within a normal time (for example, tens of seconds to 1 minute or more). The second setting part 402 switches the setting of the slave device 200 to a second mode corresponding to "Fast Connect" so that the slave device 200 and the end effector 300 connected to the slave device 200 support "Fast Connect" (a second connection scheme) for constructing appropriate communication within a time (for example, several seconds) shorter than the normal time. The "normal connection" support is synonymous with "Fast Connect" non-support. The input device 403 is a device that sets a mode of the slave device 200 from the outside of the slave device setting tool 400 in response to an instruction from a user. The slave device setting tool 400 may directly communicate with the slave device 200 in a wireless or wired manner or may communicate with the slave device 200 via the master device 100. The user can selectively preset the slave device 200 in the first or second mode using the slave device setting tool 400. The slave device 200 is configured such that the user can change the setting of the connection scheme without being fixed to a connection scheme after manufacturing.

Thus, the slave device 200 set to one of "normal connection" and "Fast Connect" in a manufacturing stage can be caused to support the other of "normal connection" and "Fast Connect" according to a manufacturing line or a manufacturing process. The end effector 300 generally supports one of "normal connection" and "Fast Connect." However, regardless of whether the end effector 300 supports "normal connection" or supports "Fast Connect," the slave device 200 can construct appropriate communication with the end effector 300.

Accordingly, by using the slave device setting tool 400, it is possible to increase types of end effectors capable of constructing the appropriate communication with the slave device 200. Therefore, it is possible to increase types of work executable in the slave device 200.

The slave device setting tool 400 can preset the slave device 200 to a third mode according to an input to the input device 403 from the user. The third mode is a mode in which the slave device 200 automatically determines whether the end effector 300 supports either the first connection scheme or the second connection scheme (in other words, whether the first end effector is connected to the slave device 200 or the second end effector is connected to the slave device 200). In the third mode, the slave device 200 first attempts to construct the appropriate communication with the end effector 300 based on the second connection scheme. When the appropriate communication may not be constructed within a predetermined time from connection start of the end effector (which can be arbitrarily set by the user; for example, about 2 seconds), the slave device 200 switches the connection scheme to the first connection scheme and attempts to construct the appropriate communication with the end effector 300 based on the first connection scheme. Thus, even when the end effector 300 connected to the slave device 200 supports only "normal connection" or supports only "Fast Connect," the slave device 200 and the end effector 300 can construct the appropriate communication.

The slave devices 201 to 203 include control parts 211 to 213, respectively. Hereinafter, the control part included in the slave device 200 among the control parts 211 to 213 is referred to as a control part 210.

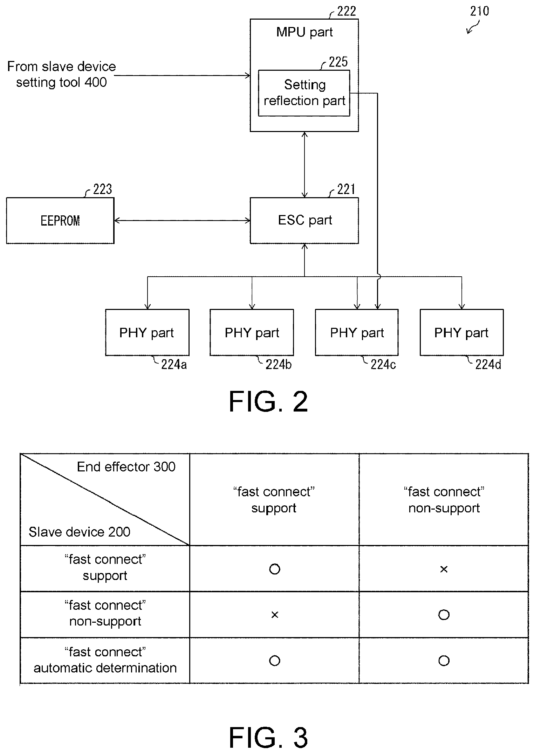

FIG. 2 is a block diagram illustrating an example of a configuration of the control part 210. The control part 210 includes an EtherCAT slave controller (ESC) part 221, a micro processing (MPU) part 222, an EEPROM (registered trademark) 223, and four PHY parts 224a to 224d. As one configuration example of the control part 210, the control part 210 includes a system on a chip (SOC) on which the ESC part 221 and the MPU part 222 are mounted on the same chip.

The ESC part 221 is slave controller (communication controller part) that processes a predetermined protocol for the industrial network system 500. The MPU part 222 is a processor that generally controls the slave device 200 and includes an ESC part 221 which is a control target by the MPU part 222. The ESC part 221 writes information on the EEPROM 223 or reads information from the EEPROM 223 as necessary.

The PHY parts 224a to 224d are each an IC chip that forms a physical layer in the slave device 200. The PHY part 224a is a communication part that communicates between the slave device 200 and an upstream side (that is, the side of the master device 100) of the slave device 200 in the industrial network system 500. The PHY parts 224b, 224c, and 224d are each a communication part that communicates between the slave device 200 and the downstream side (that is, the slave device or the end effector 300 of a subsequent stage) of the slave device 200 in the industrial network system 500. A frame flows from the upstream side to the PHY part 224a. After the MPU part 222 executes various kinds of data processing in the slave device 200, the ESC part 221 forwards the frame in order of, for example, the PHY part 224b → the PHY part 224c → the PHY part 224d in response to an instruction from the MPU part 222. The PHY parts 224b, 224c, and 224d have the same basic configuration although the forwarding order of the frame is different. Hereinafter, an example in which the PHY part 224c forwards a frame to the end effector 300 will be described.

The MPU part 222 includes a setting reflection part 225. The slave device setting tool 400 transmits an instruction to switch the setting of the slave device 200 from "Fast Connect" support to "Fast Connect" non-support to the MPU part 222 in response to an operation of the first setting part 401. In response to the instruction, the setting reflection part 225 of the MPU part 222 switches setting of a port (not illustrated) of the slave device 200 to which the end effector 300 is connected from "Fast Connect" support to "Fast Connect" non-support. In response to an operation of the second setting part 402, the slave device setting tool 400 transmits an instruction to switch the setting of the slave device 200 from "Fast Connect" non-support to the "Fast Connect" support to the MPU part 222. In response to the instruction, the setting reflection part 225 of the MPU part 222 switches the setting of the port from "Fast Connect" non-support to the "Fast Connect" support. The setting reflection part 225 can switch the setting of the port by rewriting information stored in the PHY part 224c.

The slave device setting tool 400 rewrites the information stored in the PHY part 224c through the MPU part 222 (more specifically, the setting reflection part 225). Thus, the slave device setting tool 400 switches the setting of the slave device 200. Thus, since a communication form of the slave device 200 and the end effector 300 connected to the slave device 200 can be controlled, it is possible to easily switch the setting of the slave device 200. At this time, since the slave device setting tool 400 does not change processing content of the ESC part 221, it is not necessary to reactivate the ESC part 221.

In the control part 210, the PHY part 224b may be omitted. In this case, as described above, the PHY part 224c communicates with the end effector 300 and the PHY part 224d communicates a slave device of a subsequent stage. In the control part 210, the PHY part 224d may be omitted. In this case, as described above, the PHY part 224c communicates with the end effector 300 and the PHY part 224b communicates with a slave device of a subsequent stage. In view of the above-described forwarding order, it can be said that it is more general to omit the PHY part 224b than to omit the PHY part 224d. Of course, the number of PHY parts may be 5 or more.

In the industrial network system 500, the number of slave devices 200 and the number of end effectors 300 are 3, but both the numbers may be 2 or less or may be 4 or more. Further, the slave device setting tool 400 may transmit an instruction to the master device 100 and the master device 100 may transmit the instruction to the MPU part 222. That is, the slave device setting tool 400 may switch the setting of the slave device 200 via the master device 100.

FIG. 3 is a table illustrating patterns indicating whether the slave device 200 and the end effector 300 connected to the slave device 200 can construct appropriate communication.

When both the slave device 200 and the end effector 300 support "Fast Connect," the slave device 200 and the end effector 300 can construct appropriate communication. When both the slave device 200 and the end effector 300 does not support "Fast Connect," the slave device 200 and the end effector 300 can construct appropriate communication. On the other hand, when one of the slave device 200 and the end effector 300 supports "Fast Connect" and the other of the slave device 200 and the end effector 300 does not support "Fast Connect", the slave device 200 and the end effector 300 may not construct appropriate communication.

The item "Fast Connect" automatic determination" in FIG. 3 is equivalent to a case in which an operation of the first setting part 401 is executed when the slave device setting tool 400 may not construct the appropriate communication for a predetermined time from the completion of an operation of the second setting part 402. In this case, even when the end effector 300 supports "Fast Connect" or does not support "Fast Connect," the slave device 200 and the end effector 300 can construct the appropriate communication.

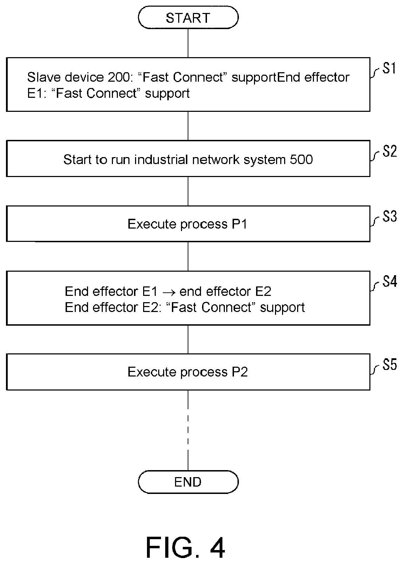

FIG. 4 is a flowchart illustrating a flow of an operation of the slave device setting tool 400 when "Fast Connect" (the second mode) is applied. Hereinafter, a method of controlling the slave device 200 (a method of controlling a slave device) will be described.

First, the second setting part 402 of the slave device setting tool 400 sets the slave device 200 to the "Fast Connect" support. Then, an end effector (second end effector) E1 supporting the "Fast Connect" is connected to the slave device 200 (step S1). Here, for example, step S1 is executed when a network configuration is generated in the industrial network system 500. Both the slave device 200 and the end effector E1 support "Fast Connect." Therefore, the slave device 200 and the end effector E1 connected to the slave device 200 can construct appropriate communication and a time necessary for the construction is very short as about several seconds. The end effector E1 and each of end effectors E2, E11, E12, E21, E22, and E32 to be described below are a kind of end effector 300.

Subsequently, the industrial network system 500 starts to be run (step S2). Subsequently, the industrial network system 500 executes a predetermined process P1 (step S3). In the process P1, the slave device 200 operates the end effector E1 so that the end effector E1 directly works on a target.

Subsequently, the end effector E1 is detached from the slave device 200 and the end effector (second end effector) E2 supporting "Fast Connect" is connected to the slave device 200 (step S4).

Subsequently, the industrial network system 500 executes a predetermined process P2 (step S5). In the process P2, the slave device 200 operates the end effector E2 so that the end effector E2 directly works on the target. Both the slave device 200 and the end effector E2 support "Fast Connect." Therefore, the slave device 200 and the end effector E2 connected to the slave device 200 can construct appropriate communication and a time necessary for the construction is very short as about several seconds.

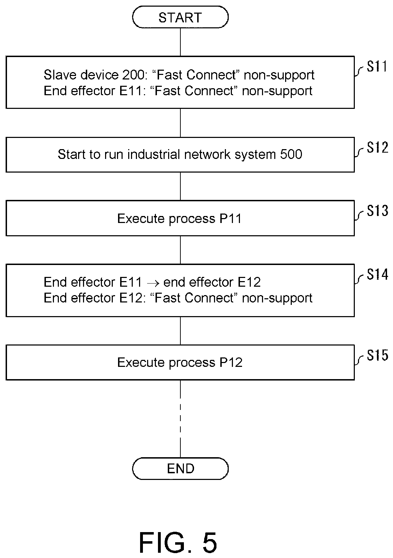

FIG. 5 is a flowchart illustrating a flow of an operation of the slave device setting tool 400 according to the embodiment of the present disclosure when applying "Fast Connect" is not applied (the first mode).

First, the first setting part 401 of the slave device setting tool 400 sets the slave device 200 to the "Fast Connect" non-support. Then, the end effector (first end effector) E11 not supporting the "Fast Connect" is connected to the slave device 200 (step S11). Here, for example, step S11 is executed when a network configuration is generated in the industrial network system 500. Both the slave device 200 and the end effector E11 do not support "Fast Connect." Therefore, the slave device 200 and the end effector E11 connected to the slave device 200 can construct appropriate communication (here, a time necessary for the construction is long as tens of seconds to 1 minute or more).

Subsequently, the industrial network system 500 starts to be run (step S12). Subsequently, the industrial network system 500 executes a predetermined process P11 (step S13). In the process P11, the slave device 200 operates the end effector E11 so that the end effector E11 directly works on a target.

Subsequently, the end effector E11 is detached from the slave device 200 and the end effector (first end effector) E12 not supporting "Fast Connect" is connected to the slave device 200 (step S14).

Subsequently, the industrial network system 500 executes a predetermined process P12 (step S15). In the process P12, the slave device 200 operates the end effector E12 so that the end effector E12 directly works on the target. Both the slave device 200 and the end effector E12 do not support "Fast Connect." Therefore, the slave device 200 and the end effector E12 connected to the slave device 200 can construct appropriate communication (here, a time necessary for the construction is long as tens of seconds to 1 minute or more).

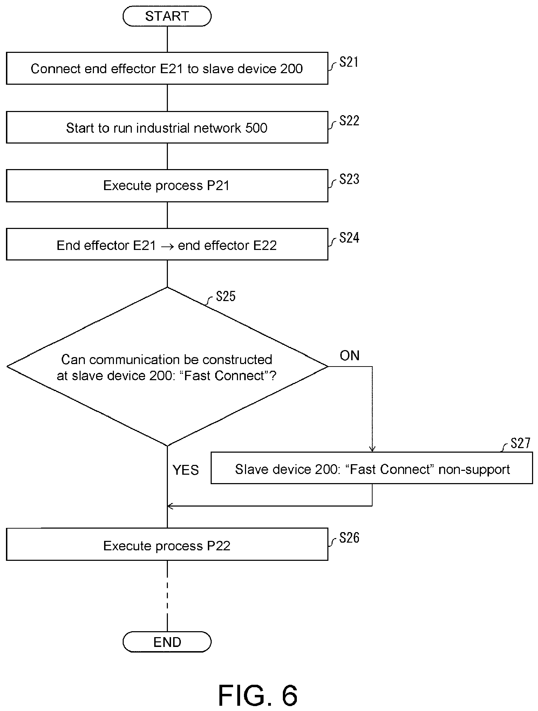

FIG. 6 is a flowchart illustrating a flow of an operation of the slave device setting tool 400 when "Fast Connect" is automatically determined (the third mode).

First, the end effector E21 is connected to the slave device 200 (step S21). Here, for example, step S21 is executed when a network configuration is generated in the industrial network system 500. At this time, both the slave device 200 and the end effector E21 support "Fast Connect" (see step S1 of FIG. 4) and do not support "Fast Connect" (see step S11 of FIG. 5).

Subsequently, the industrial network system 500 starts to be run (step S22). Subsequently, the industrial network system 500 executes a predetermined process P21 (step S23). In the process P21, the slave device 200 operates the end effector E21 so that the end effector E21 directly works on a target.

Subsequently, the end effector E21 is detached from the slave device 200 and the end effector E22 is connected to the slave device 200 (step S24).

Subsequently, the second setting part 402 of the slave device setting tool 400 sets the slave device 200 to support "Fast Connect." Then, the slave device 200 attempts to construct the appropriate communication with the end effector E22 for a predetermined time (which is arbitrary set by the user and is, for example, about 2 seconds) (step S25).

When the slave device 200 and the end effector E22 can construct the appropriate communication within the foregoing predetermined time (the result of step S25 is YES), the industrial network system 500 executes a predetermined process P22 (step S26). In the process P22, the slave device 200 operates the end effector E22 so that the end effector E22 directly works on a target. Both the slave device 200 and the end effector E22 support "Fast Connect." Therefore, the slave device 200 and the end effector E22 connected to the slave device 200 can construct the appropriate communication and the time necessary for the construction is very short as about several seconds.

Conversely, when the slave device 200 and the end effector E22 may not construct the appropriate communication within the foregoing predetermined time (the result of step S25 is NO), the first setting part 401 of the slave device setting tool 400 switches the slave device 200 to the "Fast Connect" non-support (step S27). Thereafter, after the slave device 200 and the end effector E22 construct the appropriate communication, the process proceeds to step S26. Both the slave device 200 and the end effector E22 do not support "Fast Connect." Therefore, the slave device 200 and the end effector E22 connected to the slave device 200 can construct the appropriate communication (here, a time necessary for the construction is long as tens of seconds to 1 minute or more). In the third mode, when the end effector E22 which does not support "Fast Connect" is connected to the slave device 200, a time taken for the slave device 200 to first attempt to construct the communication in the second connection scheme is longer than in the first mode. Therefore, when the end effector E22 which does not support "Fast Connect" is connected to the slave device 200, setting the slave device 200 in the first mode is more advantageous than in the third mode (automatic determination). Therefore, in the slave device 200, the user can set the connection scheme of the slave device 200 in a more appropriate mode according to the end effector used in a manufacturing line (or a manufacturing process).

The user may preset that the slave device setting tool 400 executes one of an operation of the first setting part 401 and an operation of the second setting part 402 during a time determined in advance. That is, the slave device 200 may be set to one of the first and second modes in the time determined in advance. Before a work process determined in advance, the user may preset that the slave device setting tool 400 executes at least one of the operation of the first setting part 401 and the operation of the second setting part 402. That is, before the work process determined in advance, the slave device 200 may set at least one of the first and second modes. Thus, it is possible to execute the operation of the first setting part 401 and/or the second setting part 402 at a desired timing.

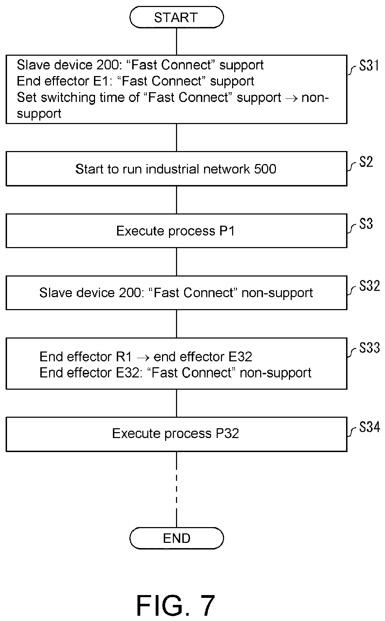

FIG. 7 is a flowchart illustrating a flow of an operation of the slave device setting tool 400 when the "Fast Connect" support and "Fast Connect" non-support of the slave device 200 are switched in the time determined in advance. Only differences between the flowchart of FIG. 7 and the flowchart of FIG. 4 will be described.

First, in addition to the operation of step S1 (see FIG. 4), the first setting part 401 sets a time at which the slave device 200 is switched to the "Fast Connect" non-support (step S31). Since the setting can be realized by a known technology using, for example, a timer, the detailed description thereof will be omitted. Here, immediately after end of step S3 (a time equivalent thereto), the first setting part 401 is assumed to switch the slave device 200 to the "Fast Connect" non-support.

Then, immediately after end of step S3 (a time determined in advance), the slave device 200 switches the connection scheme to the "Fast Connect" non-support (the first mode) (step S32).

Subsequently, the end effector E1 is detached from the slave device 200 and the end effector (first end effector) E32 not supporting "Fast Connect" is connected to the slave device 200 (step S33).

Subsequently, the industrial network system 500 executes a predetermined process P32 (step S34). In the process P32, the slave device 200 operates the end effector E32 so that the end effector E32 directly works on a target. Both the slave device 200 and the end effector E32 do not support "Fast Connect." Therefore, the slave device 200 and the end effector E32 connected to the slave device 200 can construct the appropriate communication (here, a time necessary for the construction is long as tens of seconds to 1 minute or more).

### (Application example)

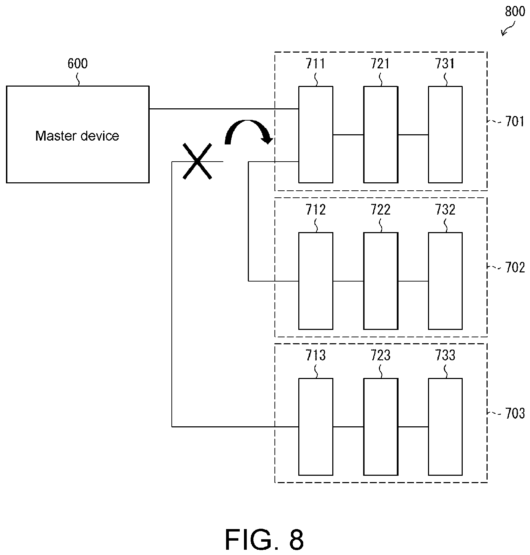

FIG. 8 is a block diagram illustrating an application example according to the foregoing embodiment.

The following (A) to (C) are considered as application regions of "Fast Connect."
(A) Fast switching of end effector of a robot.
(B) Fast switching of a tool (end effector) of a machining center and/or a CNC machine tool.
(C) Early change in network configuration because of setup change.

Hereinafter, (C) above will be described with reference to FIG. 8. An industrial network system 800 illustrated in FIG. 8 includes a master device 600 and three (a plurality of) slave device groups 701 to 703. The slave device group 701 execute a predetermined process X and a predetermined process Y and is formed by three (a plurality of) slave devices 711, 721, and 731. The slave device group 702 execute the predetermined process X and is formed by three (a plurality of) slave devices 712, 722, and 732. The slave device group 703 execute the predetermined process Y and is formed by three (a plurality of) slave devices 713, 723, and 733. The slave device group 701 is connected to the master device 600. The master device 600 corresponds to the master device 100 and each of the slave devices 711 to 713, 721 to 723, and 731 to 733 corresponds to the slave device 200.

Here, when the process X is executed, the slave device groups 701 and 702 are connected. When the process Y is executed, the slave device groups 701 and 703 are connected. In this way, the setup change is executed. When both the slave devices 711 and 713 support "Fast Connect," "Fast Connect" is applied so that the slave device groups 701 and 703 can construct the appropriate communication and a time necessary for the construction is very short as about several seconds.

The same switching as the switching between the "Fast Connect" support and non-support can be applied as long as there is Auto-MDIX or auto-negotiation such as Ether Cat.

### [Reference Signs List]

100 Master device
200, 201, 202, 203 Slave device
224a to 224d PHY part (IC chip including physical layer)
300, 301, 302, 303 End effector
400 Slave device setting tool (slave control device)
500 Industrial network system
600 Master device
711, 712, 713, 721, 722, 723, 731, 732, 733 Slave device
800 Industrial network system
E1, E2, E11, E12, E21, E22, E32 End effector

## Claims

1. A slave device (200, 201, 202, 203, 711, 712, 713, 721, 722, 723, 731, 732, 733),
wherein a user is able to preset
a first mode corresponding to a first connection scheme in which the slave device (200, 201, 202, 203, 711, 712, 713, 721, 722, 723, 731, 732, 733) and a first end effector (E11, E12, E32) connected to the slave device (200, 201, 202, 203, 711, 712, 713, 721, 722, 723, 731, 732, 733) construct appropriate communication, and
a second mode corresponding to a second connection scheme in which the slave device (200, 201, 202, 203, 711, 712, 713, 721, 722, 723, 731, 732, 733) and a second end effector (E1, E2) connected to the slave device (200, 201, 202, 203, 711, 712, 713, 721, 722, 723, 731, 732, 733) construct appropriate communication, wherein a time necessary to construct the appropriate communication is shorter in the second connection scheme than in the first connection scheme.

2. The slave device (200, 201, 202, 203, 711, 712, 713, 721, 722, 723, 731, 732, 733) according to claim 1, wherein the user is able to preset a third mode in which the slave device (200, 201, 202, 203, 711, 712, 713, 721, 722, 723, 731, 732, 733) automatically determines whether the first end effector (E11, E12, E32) is connected to the slave device (200, 201, 202, 203, 711, 712, 713, 721, 722, 723, 731, 732, 733) or the second end effector (E1, E2) is connected to the slave device (200, 201, 202, 203, 711, 712, 713, 721, 722, 723, 731, 732, 733).

3. The slave device (200, 201, 202, 203, 711, 712, 713, 721, 722, 723, 731, 732, 733) according to claim 1 or 2, comprising:
an IC chip forms a physical layer (224a to 224d),
wherein a setting of the slave device (200, 201, 202, 203, 711, 712, 713, 721, 722, 723, 731, 732, 733) is switched by rewriting information stored in the IC chip.

4. The slave device (200, 201, 202, 203, 711, 712, 713, 721, 722, 723, 731, 732, 733) according to any one of claims 1 to 3, wherein one of the first and second modes is set during a time determined in advance.

5. The slave device (200, 201, 202, 203, 711, 712, 713, 721, 722, 723, 731, 732, 733) according to any one of claims 1 to 3, wherein, before a working process determined in advance, at least one of the first and second modes is set.

6. An industrial network system (500, 800) comprising the slave device (200, 201, 202, 203, 711, 712, 713, 721, 722, 723, 731, 732, 733) according to anyone of claims 1 to 5.

7. A method of controlling a slave device (200, 201, 202, 203, 711, 712, 713, 721, 722, 723, 731, 732, 733),
wherein a user is able to preset
a first mode corresponding to a first connection scheme in which the slave device (200, 201, 202, 203, 711, 712, 713, 721, 722, 723, 731, 732, 733) and a first end effector (E11, E12, E32) connected to the slave device (200, 201, 202, 203, 711, 712, 713, 721, 722, 723, 731, 732, 733) construct appropriate communication, and
a second mode corresponding to a second connection scheme in which the slave device (200, 201, 202, 203, 711, 712, 713, 721, 722, 723, 731, 732, 733) and a second end effector (E1, E2) connected to the slave device (200, 201, 202, 203, 711, 712, 713, 721, 722, 723, 731, 732, 733) construct appropriate communication, wherein a time necessary to construct the appropriate communication is shorter in the second connection scheme than in the first connection scheme.

## Amended claims

### Amended claims in accordance with Rule 137(2) EPC.

1. A slave device (200, 201, 202, 203, 711, 712, 713, 721, 722, 723, 731, 732, 733) for an industrial network system (500), the industrial network system (500) comprising a master device (100), a slave device setting tool (400) for presetting the slave device (200, 201, 202, 203, 711, 712, 713, 721, 722, 723, 731, 732, 733) to one of a plurality of modes based on a user selection, and a plurality of end effectors (301, 302, 303) comprising at least a first end effector (E11, E12, E32) supporting only a first connection scheme for connecting with the slave device (200, 201, 202, 203, 711, 712, 713, 721, 722, 723, 731, 732, 733) and a second end effector (E1, E2) supporting only a second connection scheme for connecting with the slave device (200, 201, 202, 203, 711, 712, 713, 721, 722, 723, 731, 732, 733),
wherein the slave device (200, 201, 202, 203, 711, 712, 713, 721, 722, 723, 731, 732, 733) is configured to operate the end effectors (301, 302, 303) to directly work on a target,
**characterized in that**
the slave device (200, 201, 202, 203, 711, 712, 713, 721, 722, 723, 731, 732, 733) is configured to be preset by a user to one of a first mode of the plurality of modes and a second mode of the plurality of modes,
the first mode corresponding to the first connection scheme in which the slave device (200, 201, 202, 203, 711, 712, 713, 721, 722, 723, 731, 732, 733) and the first end effector (E11, E12, E32) connected to the slave device (200, 201, 202, 203, 711, 712, 713, 721, 722, 723, 731, 732, 733) construct appropriate communication, and
the second mode corresponding to the second connection scheme in which the slave device (200, 201, 202, 203, 711, 712, 713, 721, 722, 723, 731, 732, 733) and the second end effector (E1, E2) connected to the slave device (200, 201, 202, 203, 711, 712, 713, 721, 722, 723, 731, 732, 733) construct appropriate communication, wherein a time necessary to construct the appropriate communication is shorter in the second connection scheme than in the first connection scheme.

2. The slave device (200, 201, 202, 203, 711, 712, 713, 721, 722, 723, 731, 732, 733) according to claim 1, wherein the slave device (200, 201, 202, 203, 711, 712, 713, 721, 722, 723, 731, 732, 733) is configured to be preset by a user to a third mode of the plurality of modes in which the slave device (200, 201, 202, 203, 711, 712, 713, 721, 722, 723, 731, 732, 733) determines whether the first end effector (E11, E12, E32) is connected to the slave device (200, 201, 202, 203, 711, 712, 713, 721, 722, 723, 731, 732, 733) or the second end effector (E1, E2) is connected to the slave device (200, 201, 202, 203, 711, 712, 713, 721, 722, 723, 731, 732, 733).

3. The slave device (200, 201, 202, 203, 711, 712, 713, 721, 722, 723, 731, 732, 733) according to claim 1 or 2, comprising:
an Integrated Circuit, IC, chip forms a physical layer (224a to 224d),
wherein a setting of the slave device (200, 201, 202, 203, 711, 712, 713, 721, 722, 723, 731, 732, 733) is switched by rewriting information stored in the IC chip.

4. The slave device (200, 201, 202, 203, 711, 712, 713, 721, 722, 723, 731, 732, 733) according to any one of claims 1 to 3, wherein one of the first and second modes is set during a time determined in advance.

5. The slave device (200, 201, 202, 203, 711, 712, 713, 721, 722, 723, 731, 732, 733) according to any one of claims 1 to 3, wherein, before a working process determined in advance, at least one of the first and second modes is set.

6. An industrial network system (500, 800) comprising the slave device (200, 201, 202, 203, 711, 712, 713, 721, 722, 723, 731, 732, 733) according to any one of claims 1 to 5, and further comprising:
a master device (100), a slave device setting tool (400) for presetting the slave device (200, 201, 202, 203, 711, 712, 713, 721, 722, 723, 731, 732, 733) to one of a plurality of modes based on a user selection, and a plurality of end effectors (301, 302, 303) comprising at least a first end effector (E11, E12, E32) supporting only a first connection scheme for connecting with the slave device (200, 201, 202, 203, 711, 712, 713, 721, 722, 723, 731, 732, 733) and a second end effector (E1, E2) supporting only a second connection scheme for connecting with the slave device (200, 201, 202, 203, 711, 712, 713, 721, 722, 723, 731, 732, 733).

7. A method of controlling a slave device (200, 201, 202, 203, 711, 712, 713, 721, 722, 723, 731, 732, 733) in an industrial network system (500, 800) according to claim 6,
wherein a user presets the slave device (200, 201, 202, 203, 711, 712, 713, 721, 722, 723, 731, 732, 733) to one of the first mode of the slave device (200, 201, 202, 203, 711, 712, 713, 721, 722, 723, 731, 732, 733) and the second mode of the slave device ((200, 201, 202, 203, 711, 712, 713, 721, 722, 723, 731, 732, 733).

8. A method according to claim 7, wherein the user presets the slave device (200, 201, 202, 203, 711, 712, 713, 721, 722, 723, 731, 732, 733) to switch from one of the first mode and the second mode to the other of the first and the second mode at a predetermined time during the operation of the slave device (200, 201, 202, 203, 711, 712, 713, 721, 722, 723, 731, 732, 733).

9. A method of controlling a slave device (200, 201, 202, 203, 711, 712, 713, 721, 722, 723, 731, 732, 733) in an industrial network system (500, 800) according to claim 6, wherein the slave device is according to claim 2,
wherein the user presets the slave device (200, 201, 202, 203, 711, 712, 713, 721, 722, 723, 731, 732, 733) to the third mode.
